# EUROPEAN PATENT SPECIFICATION

(11) **EP 2 179 774 B1**
(45) Date of publication and mention of the grant of the patent: **19.09.2012**
(21) Application number: 08018495.5
(22) Date of filing: 22.10.2008
(51) Int. Cl.: B01D 5/00, B01D 1/00, B01D 1/28, C02F 1/04, F28B 1/00, F28B 5/00

(54) **Water purification system and method**
System und Verfahren zur Wasserreinigung
Système et procédé de purification de l'eau

(43) Date of publication of application: 28.04.2010
(73) Proprietor: King Abdulaziz City for Science and Technology, Riyadh 11442 (SA)
(72) Inventor: Mazen Abdullah Baabbad, Dr., Riyadh 11442 (SA)
(74) Representative: Appelt, Christian W.

(56) References cited:
- WO-A-2008/058242
- US-A- 3 738 410
- US-A- 4 671 856
- US-A1- 2007 007 120

## Description

The present invention relates to a water purification system and a method of purifying water.

Of the known methods for providing purified water thermal distillation typically produces the highest purity of water. Unfortunately, most of the thermal distillation systems are only cost effective when used in large-scale systems which are configured to handle several hundred thousand cubic meters per day and whose running costs are comparable to other water purification units of a similar throughput.

Mechanical vapour compression distillation techniques were introduced to provide economically viable medium-sized units configured to handle several thousand cubic meters per day. However, such mechanical vapour compression techniques require large amounts of thermal and mechanical energy as well as a large capital investment.

This is partly because such systems compress steam to facilitate condensation and heat transfer, thus using mechanical energy which is typically more expensive to generate than, for instance, thermal energy.

Further, such mechanical vapour compression systems, just like many other water purification systems, discharge waste water having a high concentration of salts in particular, which is why it is also referred to as brine. Brine is discharged mainly to prevent the distillation system from clogging due to salt and scale build-up. Rejecting water having such a high concentration of salt, however, can be critical with regard to environmental pollution.

Accordingly, it is an object of the present invention to provide a water purification system, which operates reliably, cost-efficiently, and with little impact on the environment.

US 2007/007 120 discloses a desalination system comprising a counter-flow heat exchanger including an outer chamber and an inner chamber, a boiler unit with a heated surface, a condensation unit and a heater component arranged between the boiler unit and the condensation unit.

WO 2008/058242 discloses methods and apparatus for distillation over wide ranges of temperatures and pressures.

The above object is achieved by the system according to claim 1 and a method according to claim 9. Preferred embodiments are covered by the sub-claims.

The skilled person will understand that further steps of said method may be added in agreement with the description of (the use of) the system according to the present invention.

Further details and characteristics of the invention will be set forth below in conjunction with the drawings, where
- Fig. 1: shows an embodiment of the water purification system according to the present invention;
- Fig. 2: shows the inside, especially the heated surface of the system shown in Fig. 1 in more detail;
- Fig. 3: shows the heater of the water purification system according to the present invention;
- Figs. 4 and 5: each show the condenser unit according to the present invention;
- Fig. 6: shows an inclined surface forming part of the water purification system according to the present invention.

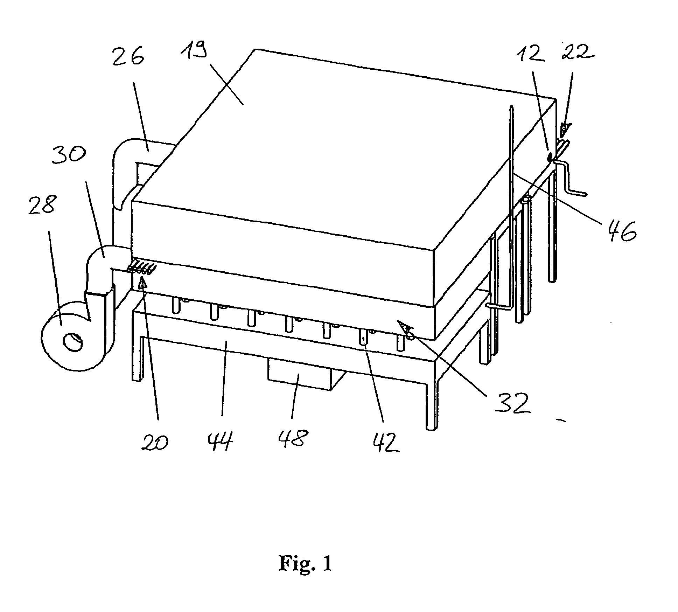

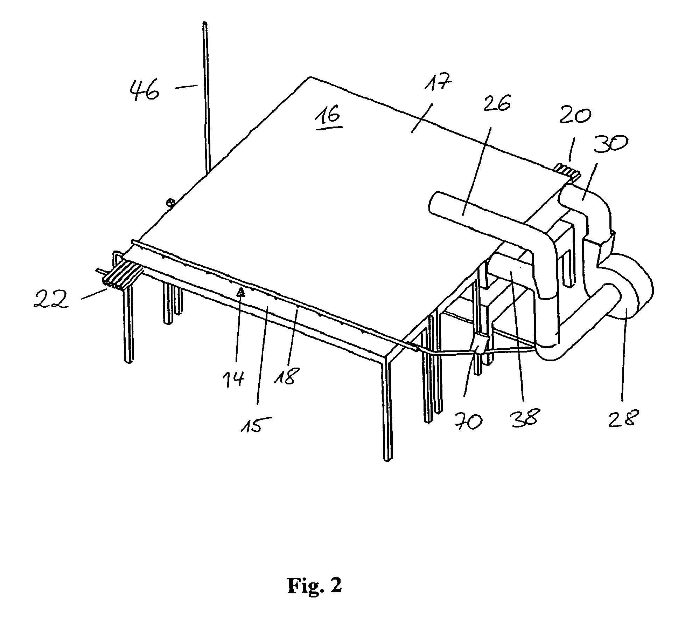

An embodiment of the water purification unit 10 according to the present invention is shown in Figs. 1 and 2.

The water purification unit 10 has a first inlet 12 for impure water. Said first inlet 12 is connected to a dispenser 14 having the form of a thin tube arranged just above and extending across a heated surface 16 near a first end 15 of the surface 16.

The dispenser 14 has holes or nozzles 18 facing the surface 16 and being distributed along the dispenser's entire length so as to be capable of uniformly dispensing impure water to said first end 15 of surface 16.

Said surface 18 is of a rectangular shape, with the first end 15 and a second end 17 being arranged on opposing sides thereof. Said surface 18 is arranged inside the water purification unit 10 and is covered by a casing 19.

Said surface 18 is configured and arranged in the water purification unit 10 to form a slightly inclined surface in order to cause water dispensed to the first end 15 to flow gently towards the second end 17 under the action of gravity.

The water purification unit 10 further has a second inlet 20 for hot fluid. Said second inlet 20 is arranged underneath the second end 17 of the surface 16. The water purification unit 10 further has a corresponding outlet 22 for hot fluid, which outlet 22 is arranged underneath the first end 15 of the surface 16.

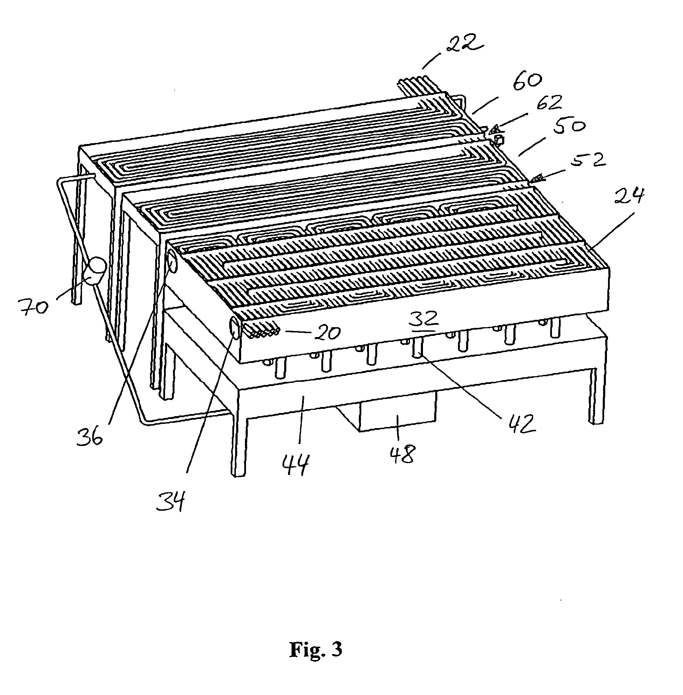

Said hot fluid is guided through a heater 24, which at its first end is connected to said second inlet 20 to receive the hot fluid. Said heater comprises meandering tubes carrying the hot fluid (shown in more detail in Fig. 3), which tubes are arranged below and thermally coupled to the surface 16. In the embodiments discussed herein the hot fluid can be exhausted gas or oil. Said tubes are thermally coupled to the surface 16 especially via water vapour surrounding the tubes. Said part of the water vapour takes up heat from the hot tubes and transfers said additional heat to the surface 16, thus acting as a heat transfer medium.

Thus, with the aid of heat transferred to the surface 16 from heater 24, surface 16 is heated up sufficiently to effect evaporation of impure water running down the inclined surface. Accordingly, an atmosphere of water vapour is created especially above and near the second end 17 of the surface 16.

Water vapour thus generated above surface 16 is extracted with the aid of a first tube 26 leading out from the inside of casing 19 and a blower 28 arranged outside casing 19 attached to said tube 26. Said blower 28 then pushes the extracted water vapour via a second tube 30 into a condensation unit 32 arranged underneath the second end 17 through a first hole 34 leading into the condensation unit 32.

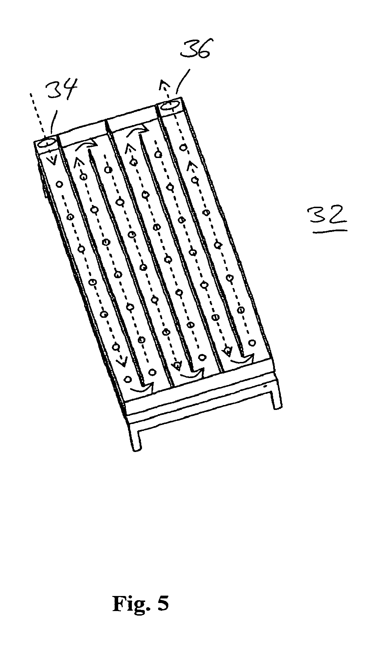

Condensation unit 32 provides a meandering path on its inside between said first hole 34, through which water vapour enters the condensation unit 32, and a second hole 36, through which uncondensed water vapour leaves the condensation unit 32, along which meandering path (cf. Fig. 5) the water vapour is forced to flow due to the action of the blower 28. Connected to the second hole 36 is a third tube 38, which third tube is connected at its other end to the blower 28. Said third tube is thus configured to guide any uncondensed water vapour back to the first hole 34 via said blower 28.

As shown in Fig. 3, the heater 24, which comprises tubes guiding hot fluid through the water purification unit 10, is arranged inside the condensation unit 32 near the top or ceiling thereof. Water vapour being guided along the meandering path inside the condensation unit 32 will thus take up heat near the top of the condensation unit to act as a heat transfer medium facilitating heat transfer to the evaporation surface 16 which is arranged immediately above heater 24. To support this effect, guiding members 40 are arranged at the bottom of the condensation unit 32 along the meandering path. Each of those guiding members 40 provides a short and relatively steep upward slope for the water vapour flowing along the meandering path. Accordingly, each guiding member 40 is configured and arranged to guide water vapour up towards heater 24. Thereby, each guiding member 40 creates some turbulence in the water vapour flowing along the meandering path.

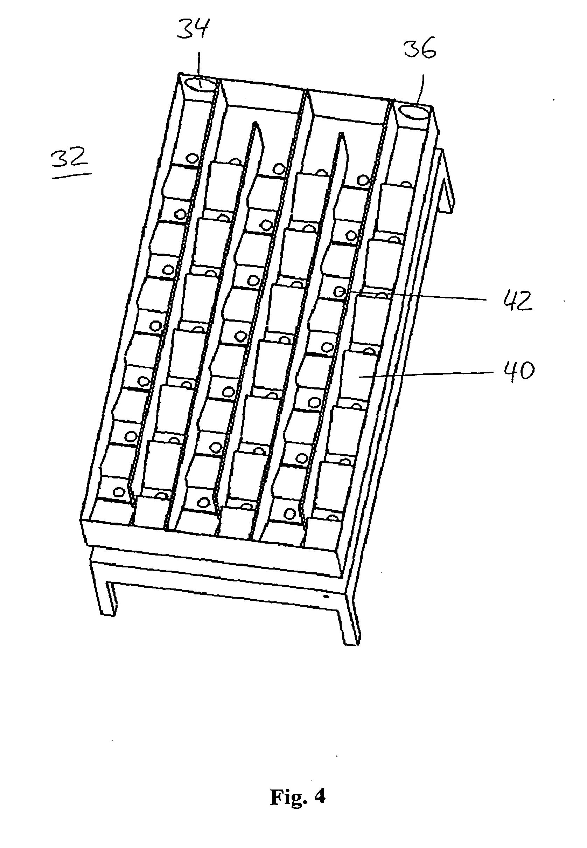

In the course of being guided upwards, said water vapour partially condenses on the guiding members 40, which may, for instance, be made of metal. As a result, condensed water will run back down the slopes of the guiding members 40 and flow into collection pipes 42 arranged in between two neighbouring guiding members 40, as shown especially in Figs. 1, 3, and 4. Put differently, since each of those guiding members 40 provides a short and relatively steep upward slope for the water vapour flowing along the meandering path, pockets of stagnant water vapour are created which allow the water vapour to condense on the surrounding surfaces and flow into collection pipes 42.

Collection pipes 42 lead to first collection tank 44 arranged underneath the condensation unit 32. In the first collection tank 44 non-condensable gases are vented through an exhaust pipe 46 and condensed water is sent down to the second collection tank 48.

The water purification unit 10 further comprises a fluid heat exchanger 50. As shown in Fig. 3, the tubes of the heater 24 leave the condensation unit 32 at the opposite side/end to the one at which the inlet 20 is arranged. Those tubes then enter the fluid heat exchanger 50, which is arranged side-by-side with the condensation unit, via an inlet 52. Inside the fluid heat exchanger 50 the heat inherent in the still hot fluid is used to pre-heat the fluid to enter the condensation unit 32 via inlet 20 thereby transferring the remaining heat from the tubes of the heater 24 that was not consumed by the unit 32 to the evaporation surface 16.

The water purification unit 10 further comprises a water heat exchanger 60 and a pump 70 to pump condensed water from the second tank 48 to the water heat exchanger 60.

Said water heat exchanger is arranged side-by-side with the fluid heat exchanger 50 and has an inlet 62 for fluid coming from the fluid heat exchanger. Said fluid is passed through the interior of said water heat exchanger 60 and finally leaves the water heat exchanger via outlet 22. The heat of both the fluid and the condensed water is used inside the water heat exchanger to pre-heat impure water which is subsequently to be dispensed onto surface 16 thereby facilitating subsequent evaporation from surface 16 by using the heat that was not consumed by the unit 32 nor by the unit 50 along with the heat stored in the condensed water

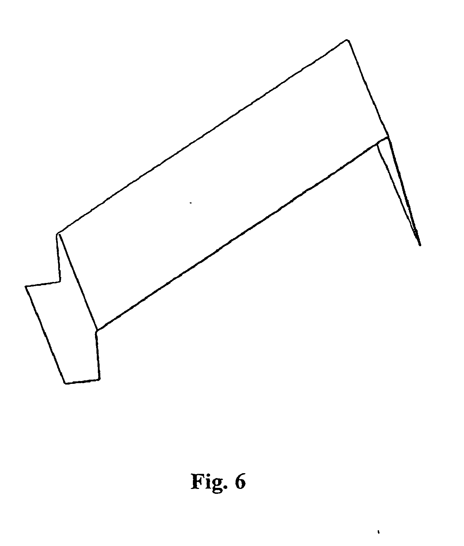

Surface 16 may be formed from a metal sheet to take on the form shown in Fig. 6. Other forms and arrangements of the surface 16 are, however, within the scope of the present invention. In particular, the whole water purification unit 10 may be arranged so that the first end 15 is higher than the second end 17 of surface 16. To this end, the whole unit may, for instance, be tilted.

It is to be understood that the invention may be practiced within the scope of the claims differently from the examples described.

## Claims

1. Water purification system, comprising
an inlet (12) for impure water;
a heated surface (16) arranged within the water purification unit (10) so that a first end (15) of the surface (16) is located higher than a second end (17) of the surface (16),
a dispenser (14) connected to the inlet (12) and arranged above and extending across the heated surface (16) near the first end (15), the dispenser (14) having the form of a thin tube having nozzles (18) distributed along the dispensers entire length and facing the surface (16) so as to be capable of uniformly dispensing impure water to the first end (15) of the surface (16);
a condensation unit (32) arranged underneath the second end (17) to receive and re-condense water vapour; and
a heater (24) arranged inside the condensation unit (32) for heating water vapour inside the condensation unit (32).

2. Water purification system according to claim 1, wherein
the heater (24) comprises meandering tubes configured to receive hot fluid.

3. Water purification system according to claim 1 or 2, wherein
the condensation unit (32) is arranged underneath the heated surface (16), provides a meandering path along which the received water vapour is guided, and the heater (24) is arranged inside the condensation unit (32) and near the top thereof.

4. Water purification system according to claim 3, wherein the condensation unit (32) comprises at least one guiding member (40) arranged at the bottom of said condensation unit (32) for guiding water vapour towards the heater (24).

5. Water purification system according to any one of the preceding claims, further comprising a fluid heat exchanger (50) arranged downstream of and connected to the heater (24) for transferring fluid from the heater (24) to the fluid heat exchanger (50) to pre-heat fluid using the heat inherent in the fluid coming from the heater (24).

6. Water purification system according to any one of the preceding claims, further comprising a water heat exchanger (60) arranged downstream of and connected to the condensation unit (32) for pre-heating impure water.

7. Water purification system according to claim 6, wherein the water heat exchanger (60) is arranged downstream of and connected to the fluid heat exchanger (50).

8. Water purification system according to claim 6 or 7, wherein the condensation unit (32) is arranged side-by-side with the fluid heat exchanger (50) and the fluid heat exchanger (50) is arranged side-by-side with the water heat exchanger (60), the condensation unit (32), the fluid heat exchanger (50), and the water heat exchanger being arranged underneath the heated surface (16).

9. Method of purifying water, comprising the steps of
dispensing impure water onto an inclined, heated surface (16), wherein the water is uniformly dispensed to a first end (15) of the surface (16) that is located higher than a second end (17) of the surface (16) by nozzles (18) from above the heated surface (16), using a dispenser (14) connected to the inlet (12) arranged above and extending across the heated surface (16), the dispenser (14) having the form of a thin tube provided with said nozzles (18) that are distributed along the dispensers entire length;
evaporating impure water from the surface (16) to generate water vapour; using a condensation unit (32) arranged underneath the second end (17) to receive and re-condense water vapour;
heating the surface (16) by heating the generated water vapour using a heater (24) arranged inside the condensation unit (32) for heating the water vapour inside the condensation unit (32), and using the heated water vapour as a heat transfer medium;
re-condensing said water vapour.

10. Method of purifying water according to claim 9, wherein
heating the generated water vapour comprises guiding the water vapour towards said heater (24).

11. Method of purifying water according to claim 9 or 10, wherein
heat inherent in the re-condensed water vapour is used to pre-heat impure water.

## Patentansprüche

1. Wasserreinigungssystem, das Folgendes umfasst:
einen Einlauf (12) für verunreinigtes Wasser,
eine erhitze Oberfläche (16), die innerhalb der Wasserreinigungseinheit (10) eingerichtet ist, sodass ein erstes Ende (15) der Oberfläche (16) höher als ein zweites Ende (17) der Oberfläche (16) angebracht ist,
einen Spender (14), der am Einlass (12) angeschlossen und darüber eingerichtet ist, und sich quer über die erhitzte Oberfläche (16) nahe am ersten Ende (15) erstreckt, wobei der Spender (14) die Form einer dünnen Röhre mit Düsen (18) hat, die an der ganzen Länge des Spenders entlang verteilt sind und der Oberfläche (16) gegenüberstehen, sodass sie in der Lage sind, verunreinigtes Wasser gleichmäßig an das erste Ende (15) der Oberfläche (16) abzugeben,
eine Kondensationseinheit (32), die unter dem zweiten Ende (17) so eingerichtet ist, dass sie den Wasserdampf aufnimmt und erneut kondensiert, und
ein Heizgerät (24), das innerhalb der Kondensationseinheit (32) zum Erhitzen des Wasserdampfes innerhalb der Kondensationseinheit (32) eingerichtet ist.

2. Wasserreinigungssystem nach Anspruch 1, wobei
das Heizgerät (24) gewundene Röhren umfasst, die so konfiguriert sind, dass sie eine heiße Flüssigkeit aufnehmen.

3. Wasserreinigungssystem nach Anspruch 1 oder 2, wobei die Kondensationseinheit (32) unter der erhitzten Oberfläche (16) eingerichtet ist, und einen gewundenen Pfad bereitstellt, an dem entlang der erhaltene Wasserdampf geleitet wird, und das Heizgerät (24) innerhalb der Kondensationseinheit (32) und nahe am Oberteil davon eingerichtet ist.

4. Wasserreinigungssystem nach Anspruch 3, wobei die Kondensationseinheit (32) mindestens ein führendes Bauteil (40) umfasst, das unten an der Kondensationseinheit (32) so eingerichtet ist, dass es Wasserdampf in Richtung des Heizgerätes (24) leitet.

5. Wasserreinigungssystem nach einem der vorangehenden Ansprüche, das weiter einen Flüssigkeitswärmetauscher (50) umfasst, der dem Heizgerät (24) nachgeschaltet and daran angeschlossen ist, um Flüssigkeit vom Heizgerät (24) zum Flüssigkeitswärmetauscher (50) zu transferieren, und um die Flüssigkeit mithilfe der Hitze, die in der Flüssigkeit des Heizgerätes (24) inhärent ist, vorzuheizen.

6. Wasserreinigungssystem nach einem der vorangehenden Ansprüche, das weiter einen Wasserwärmetauscher (60) umfasst, der der Kondensationseinheit (32) nachgeschaltet und daran angeschlossen ist, um das verunreinigte Wasser vorzuheizen.

7. Wasserreinigungssystem nach Anspruch 6, wobei der Wasserwärmetauscher (60) dem Flüssigkeitswärmetauscher (50) nachgeschaltet und daran angeschlossen ist.

8. Wasserreinigungssystem nach Anspruch 6 oder 7, wobei die Kondensationseinheit (32) neben dem Flüssigkeitswärmetauscher (50) eingerichtet ist, und der Flüssigkeitswärmetauscher (50) neben dem Wasserwärmetauscher (60) eingerichtet ist, wobei die Kondensationseinheit (32), der Flüssigkeitswärmetauscher (50) und der Wasserwärmetauscher unter der erhitzen Oberfläche (16) eingerichtet sind.

9. Verfahren zum Reinigen von Wasser, das folgende Schritte umfasst:
Abgeben von verunreinigtem Wasser auf eine geneigte, geheizte Oberfläche (16), wobei das Wasser gleichmäßig an ein erstes Ende (15) der Oberfläche (16) abgegeben wird, die höher ist, als ein zweites Ende (17) an der Oberfläche (16) mit Düsen (18), von über der erhitzen Oberfläche (16), wobei ein Spender (14) verwendet wird, der am Einlass (12) angeschlossen ist, der darüber eingerichtet ist und sich quer über die erhitzte Oberfläche (16) erstreckt, wobei der Spender (14) die Form einer dünnen Röhre hat, die mit Düsen (18) ausgestattet ist, die an der gesamten Länge des Spenders entlang verteilt sind.
Verdunsten von verunreinigtem Wasser von der Oberfläche (16), um Wasserdampf zu erzeugen,
wobei eine Kondensationseinheit (32) verwendet wird, die unter dem zweiten Ende (17) so eingerichtet ist, dass sie den Wasserdampf aufnimmt und erneut kondensiert,
und wobei die Oberfläche (16) erhitzt wird, indem der erzeugte Wasserdampf mit einem Heizgerät (24) erhitzt wird, das innerhalb der Kondensationseinheit (32) zum Erhitzen des Wasserdampfs innerhalb der Kondensationseinheit (32) eingerichtet ist, und den erhitzten Wasserdampf als Wärmeleitmedium verwendet,
erneutes Kondensieren des Wasserdampfes.

10. Verfahren zum Reinigen des Wassers nach Anspruch 9, wobei
ein Erhitzen des generierten Wasserdampfes ein Leiten des Wasserdampfes in Richtung des Heizgerätes (24) umfasst.

11. Verfahren zum Reinigen des Wassers nach Anspruch 9 oder 10, wobei
Hitze, die im erneut kondensierten Wasserdampf inhärent ist, zum Vorheizen des verunreinigten Wassers verwendet wird.

## Revendications

1. Système de purification d'eau, comportant
une entrée (12) pour l'eau impure ;
une surface chauffée (16) arrangée à l'intérieur de l'unité de purification d'eau (10) de sorte qu'une première extrémité (15) de la surface (16) est située plus haut par rapport à une seconde extrémité (17) de la surface (16),
un distributeur (14) raccordé sur l'entrée (12) et arrangé au-dessus et s'étendant en travers de la surface chauffée (16) à proximité de la première extrémité (15), le distributeur (14) ayant la forme d'un tube mince muni de buses (18) réparties sur toute la longueur du distributeur et faisant face à la surface (16) de manière à pouvoir distribuer l'eau impure de manière uniforme sur la première extrémité (15) de la surface (16) ;
une unité de condensation (32) arrangée sous la seconde extrémité (17) à des fins de réception et de re-condensation de la vapeur d'eau ; et
un corps de chauffe (24) arrangé à l'intérieur de l'unité de condensation (32) à des fins de chauffage de la vapeur d'eau à l'intérieur de l'unité de condensation (32).

2. Système de purification d'eau selon la revendication 1, dans lequel
le corps de chauffe (24) comporte des tubes en dents de scie configurés pour recevoir un fluide chaud.

3. Système de purification d'eau selon la revendication 1 ou la revendication 2, dans lequel
l'unité de condensation (32) est arrangée sous la surface chauffée (16), procure une trajectoire en dents de scie le long de laquelle la vapeur d'eau reçue est guidée, et le corps de chauffe (24) est arrangé à l'intérieur de l'unité de condensation (32) et à proximité de la partie supérieure de celle-ci.

4. Système de purification d'eau selon la revendication 3, dans lequel l'unité de condensation (32) comporte au moins un élément de guidage (40) arrangé au niveau de la partie inférieure de ladite unité de condensation (32) à des fins de guidage de la vapeur d'eau vers le corps de chauffe (24).

5. Système de purification d'eau selon l'une quelconque des revendications précédentes, comportant par ailleurs un échangeur de chaleur à fluide (50) arrangé en aval par rapport au et raccordé sur le corps de chauffe (24) à des fins de transfert du fluide en provenance du corps de chauffe (24) jusqu'à l'échangeur de chaleur à fluide (50) afin de pré-chauffer le fluide en utilisant la chaleur inhérente au fluide provenant du corps de chauffe (24).

6. Système de purification d'eau selon l'une quelconque des revendications précédentes, comportant par ailleurs un échangeur de chaleur à eau (60) arrangé en aval par rapport à et raccordé sur l'unité de condensation (32) à des fins de préchauffage de l'eau impure.

7. Système de purification d'eau selon la revendication 6, dans lequel l'échangeur de chaleur à eau (60) est arrangé en aval par rapport à et raccordé sur l'échangeur de chaleur à fluide (50).

8. Système de purification d'eau selon la revendication 6 ou la revendication 7, dans lequel l'unité de condensation (32) est arrangée côte à côte avec l'échangeur de chaleur à fluide (50) et l'échangeur de chaleur à fluide (50) est arrangé côte à côte avec l'échangeur de chaleur à eau (60), l'unité de condensation (32), l'échangeur de chaleur à fluide (50), et l'échangeur de chaleur à eau étant arrangés sous la surface chauffée (16).

9. Procédé de purification d'eau, comportant les étapes consistant à distribuer de l'eau impure sur une surface chauffée inclinée (16), dans lequel l'eau est distribuée de manière uniforme sur une première extrémité (15) de la surface (16) qui est située plus haut par rapport à une seconde extrémité (17) de la surface (16) par des buses (18) se trouvant au-dessus de la surface chauffée (16), en utilisant un distributeur (14) raccordé sur l'entrée (12) se trouvant au-dessus et s'étendant en travers de la surface chauffée (16), le distributeur (14) ayant la forme d'un tube mince muni de buses (18) qui sont réparties sur toute la longueur du distributeur ;
faire évaporer l'eau impure de la surface (16) pour générer de la vapeur d'eau ; utiliser une unité de condensation (32) arrangée sous la seconde extrémité (17) à des fins de réception et de re-condensation de la vapeur d'eau ;
chauffer la surface (16) en chauffant la vapeur d'eau générée en utilisant un corps de chauffe (24) arrangé à l'intérieur de l'unité de condensation (32) pour chauffer la vapeur d'eau à l'intérieur de l'unité de condensation (32), et en utilisant la vapeur d'eau chauffée comme milieu de transfert de chaleur ;
re-condenser ladite vapeur d'eau.

10. Procédé de purification d'eau selon la revendication 9, dans lequel
l'étape consistant à chauffer la vapeur d'eau générée comporte l'étape consistant à guider la vapeur d'eau vers ledit corps de chauffe (24).

11. Procédé de purification d'eau selon la revendication 9 ou la revendication 10, dans lequel
la chaleur inhérente dans la vapeur d'eau re-condensée est utilisée à des fins de pré-chauffage de l'eau impure.
